Europäisches Patentamt

European Patent Office

Office européen des brevets

(11) Publication number: **0 296 688**
**A2**

## EUROPEAN PATENT APPLICATION

(21) Application number: 88201285.9

(22) Date of filing: 21.06.88

(51) Int. Cl.⁴ **B29C 67/14** , //B29K105:10,
**B29L31:06**

(30) Priority: 26.06.87 US 66579

(43) Date of publication of application:
28.12.88 Bulletin 88/52

(84) Designated Contracting States:
BE DE FR GB IT NL

(71) Applicant: SHELL INTERNATIONALE
RESEARCH MAATSCHAPPIJ B.V.
Carel van Bylandtlaan 30
NL-2596 HR Den Haag(NL)

(72) Inventor: Hunter, Gary Allen
16423 Amargos Drive
Houston Texas 77083(US)

(74) Representative: Aalbers, Onno et al
P.O. Box 302
NL-2501 CH The Hague(NL)

(54) Pultrusion process.

(57) A process for manufacturing bars or rods by
pultrusion comprising the curing of a bundle of fibre-
reinforced thermosetting resin whilst heating said
bundle externally and internally and minimising the
thermal gradient between the exterior and the interior of said bundle to a predetermined value.

## PULTRUSION PROCESS

This invention relates to a pultrusion process for the manufacture of bars or rods from fibre-reinforced thermosetting resins.

Pultrusion is a processing technique that may be employed to manufacture rods and bars from fibre-reinforced thermosetting resins by pulling a bundle of resin-wetted fibres through a die provided with a certain orifice and subjecting the thermosetting resin to heat-curing. Currently, the thickness of the pultrudates that can so be manufactured is limited to less than 2.5 cm. At and above this thickness the pultrudates show the undesired phenomenon of internal cracking. This phenomenon is caused by thermal stress due to uneven temperature distribution during the gelling and subsequent exothermic curing of the pultrudates. Internal cracking can be detected by visual examination and mechanical testing of the finished pultrudates.

Therefore, a process needs to be developed which will solve this problem of internal stress cracking. The present invention is concerned with a process for manufacturing bars or rods by pultrusion comprising the curing of a bundle of fibre-reinforced thermosetting resin whilst heating said bundle externally and internally and minimising the thermal gradient between the exterior and the interior of said bundle to a predetermined value.

With the thermal gradient is meant the difference in temperature between the exterior and the interior of the bundle. It is measured during the curing of the bundle exterior and is defined as having a positive value in degree centigrade when the exterior is warmer than the interior. Preferably the thermal gradient is minimised to less than $35\degree$ C, most preferably the thermal gradient is in the range of from 0 to $28\degree$ C.

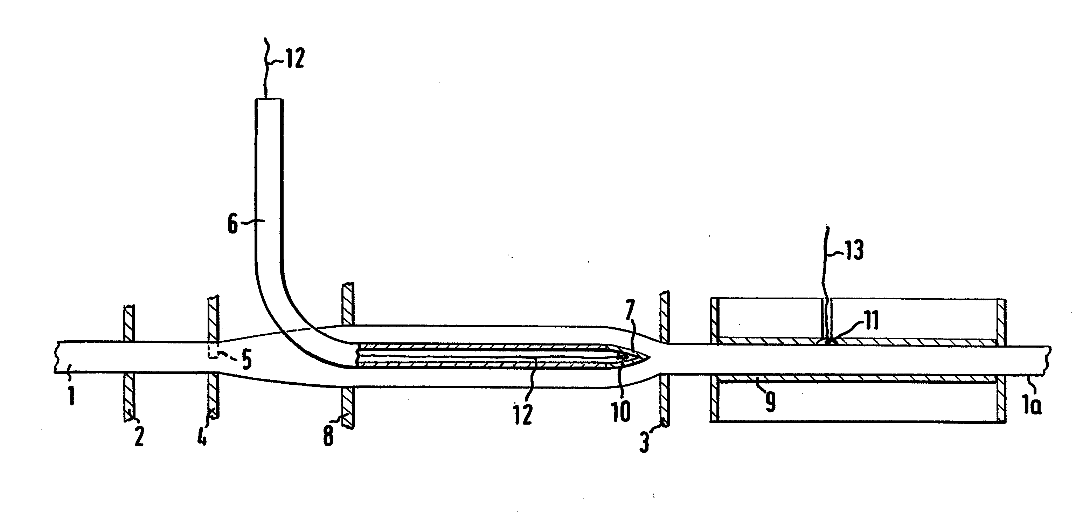

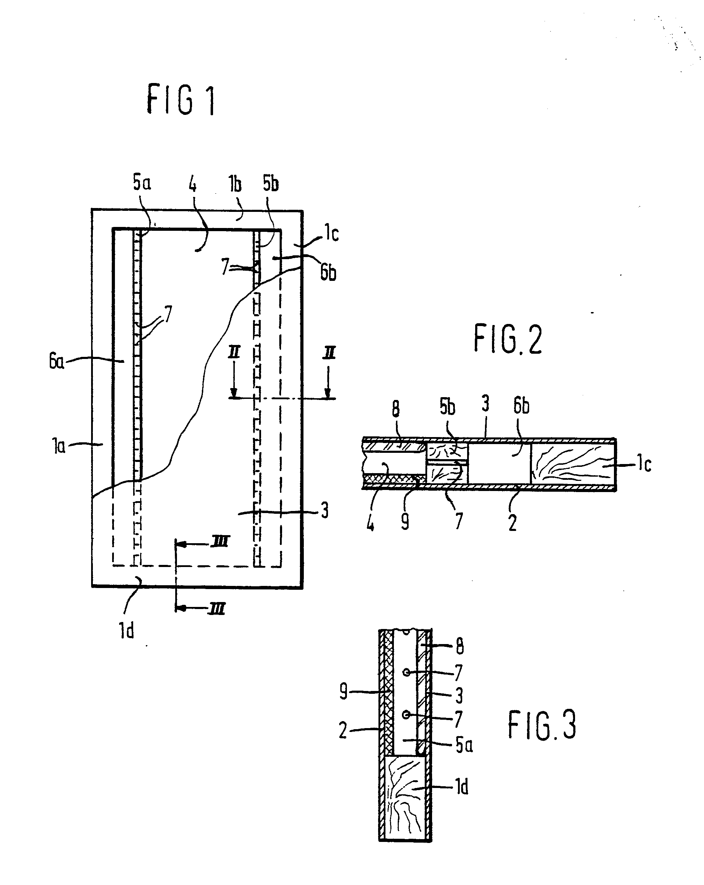

The process of this invention is explained in greater detail by referring to the schematic drawing represented in the figure.

In this figure a bundle (1) of fibre-reinforced thermosetting resin is pultruded to form a fibre-reinforced rod (1a). Firstly, the bundle passes through a sizing die (2) whilst another sizing die (3) is provided as well. Both sizing dies have a circular opening with the same diameter. Part (4) is a plate provided with an "U"-shaped stream opening, since a stream-dividing vane (5), marked in the figure by dotted lines, is fixed to the upper half of the stream opening in plate (4). The bundle continues it's path in the form of a "U"-shaped configuration, open at the top and closed at the bottom half, until an annular configuration is realised by drawing the bundle through sizing die (8). The open upper part of the bundle, before it's passing through die (8), leaves room for insertion of an "L"-shaped pipe (6), of which the hatched part shown serves as an electrical heater. This is the internal heater. Pipe (6) is at it's down-stream end provided with a streamlined flow-element (7), which assists the annularly streaming bundle to rejoin and form one massive bundle upon being passed through sizing die (3). The streaming area in the annular opening in die (8), in cm$^2$, is identical to the free area of the circular opening in die (3).

Next to passing through die (3), the bundle enters an external heater (9), which can be an electrical heater or a jacket through which hot fluid, i.e. hydrocarbon oil is circulated, and which may consist of more than one sectors. The length of the external heater should be large enough to provide for substantially complete curing of the rod upon it's leaving the outlet of the heater.

Thermocouples (10) and (11) are provided, which, via wires (12), respectively (13), are connected to appropriate monitoring and process-control equipment.

Not shown in the figure, because all such equipment is known in the art, are pulling equipment at the down-stream end, and reels for unwinding the fibre and impregnation baths or systems that apply the curable thermosetting resin composition on the fibre at the up-stream end.

Also not shown in the figure are supports, brackets and supporting frames for mounting the internal heating pipe, the external heater and the various die plates.

The process of the invention is preferably used for the manufacturing of bars or rods that have a cross-section of at least 1.2 cm, and preferably executed with the internal heater located up-stream of the external heater.

Optionally, a jacket surrounding the bundle up-stream of the external heater is part of the internal heater. It then is used in order to condition the temperature of the bundle exterior to a preselected value prior to the entrance of the bundle into the aforementioned external heater, thus eliminating variance in the pultrusion process due to changes in the ambient room temperature.

In the best mode of operating the process of the invention, an amount of thermal energy is supplied to the bundle interior sufficient to cause the bundle interior to have a higher temperature than the bundle exterior, before to the bundle is drawn through the external heater which applies additional thermal energy to the exterior of the bundle. Hence, during the resin curing step inside the external heater, the thermal gradient, initially being negative, rapidly approaches $0\degree$ C, thus eliminating thermal stress induced fractures between the bundle interior and exterior.

The elimination of thermal stress fractures allows the fabrication of a pultruded article having a relatively thick cross section not currently available from the apparatus and processes of the prior art.

In operation, the steps of the preferred process can be described as follows. The bundle interior is heated by supplying a first amount of thermal energy thereto as the bundle is drawn around and over the internal heater. The annular stream is then rejoined, and the bundle exterior is heated by supplying a second amount of thermal energy thereto as the bundle is drawn through the exterior heater.

It will be appreciated that the apparatus of the invention may further be equipped with any monitoring and process-control unit that is able to measure and control the thermal gradient during the process. The amounts of thermal energy applied to the bundle interior and exterior may thereafter be varied if necessary, so as to find the most desired amounts of thermal energy to be applied, i.e. the amounts that result in a minimal thermal gradient. Once the desired amounts have been determined, (other) stationary temperature measurement devices may be used to maintain the application of these desired amounts of thermal energy.

In some situations with use of certain blends of resins and or filaments having certain volume and/or weight percentages it may be desired to maintain the bundle interior at a temperature less than the bundle exterior. In any event the first amount of thermal energy may be varied relative to the second amount of thermal energy by either increasing the first amount of thermal energy supplied through the interior heater or by decreasing the second amount of thermal energy applied through the exterior heater.

Example

Results are presented of three experiments during the manufacture of a 12 mm nominal diameter pultruded rod using EPIKOTE 9310 and EPICURE 9360 (EPIKOTE and EPICURE are registered trademarks), a commercial accelerator, and fibreglass fibres. The weight fraction of glass to resin is 82% glass and 18% resin. The processing rate of the rod was 5 mm/sec.

Referring now to Experiment 1, the thermal gradient is measured as the bundle passed through the length of the interior, respectively the exterior heater employing thermocouples in positions as shown in the figure. A first amount of thermal energy is being added to the bundle exterior, having a value of 800 watts, while no energy is being added by the internal heater. A large thermal gradient of 42° C is measured. The finished rod shows many internal cracks.

In Experiment 2, the interior heater has been actuated to supply 320 watts of energy to the interior of the bundle prior to the bundle entering the exterior heater. The thermal gradient decreased significantly to 28° C by addition of the thermal energy to the interior of the bundle. Inspection of the rod shows a significant reduction in the occurrence of internal cracks.

Referring to Experiment 3, the thermal energy applied by the interior heater has now been increased to 400 watts. It is noted that as a result thereof the temperature of the bundle interior is 5° C less that that of the bundle exterior. Once more, the occurrence of internal cracks showed a marked reduction. Rods without any stress cracking phenomena were obtained by increasing the total wattage applied by the interior heater to 440 watts, thus reducing the thermal gradient to 0° C.

It has been found that properly cured pultrudates are achieved when the interior of the bundle is maintained at a temperature equal to or greater than the exterior of the bundle.

In a similar manner using the teachings of the present invention, it can be seen that the amount of the thermal energy applied by the interior and exterior heaters, and the feed rate can be "tuned" to get the desired (plug flow) cure of the part within the exterior heater. The bundle thereafter exits the exterior heater, cools down naturally, and enters the take-off machine that controls the process rate.

Many other variations and modifications may be made in the apparatus and techniques heretofore described by those having experience in the technology, without departing from the concept of the present invention. Accordingly it should be clearly understood that the apparatus and process depicted in the accompanying drawing referred to in the foregoing description is illustrative only and is not intended as limiting the scope of the invention.

Claims

1. A process for manufacturing bars or rods by pultrusion comprising the curing of a bundle of fibre-reinforced thermosetting resin whilst heating said bundle externally and internally and minimising the thermal gradient between the exterior and the interior of said bundle to a predetermined value.

2. A process as is claimed in claim 1, wherein an internal heater and an external heater are used to heat the bundle interior, respectively exterior.

3. A process as is claimed in claim 2, wherein the interior heater is located upstream of the external heater.

4. A process as is claimed in any one of claims 1 to 3, wherein the bars or rods have a cross-section of at least 1.2 cm.

5. A process as is claimed in any one of claims 1 to 4, wherein the thermal gradient is minimised to less than 35° C.

6. A process as is claimed in claim 5, wherein the thermal gradient is in the range of from 0 to 28° C.

7. A process as is claimed in any one of claims 1 to 6, wherein the thermal gradient is measured continuously during the curing, and wherein, when the thermal gradient is above the predetermined value, the energy supplies to the internal and external heater are varied to bring the thermal gradient below the predetermined value.

EP 0 296 688 A2

# FIG 1

# FIG.2

# FIG.3